(19) Europäisches Patentamt
European Patent Office
Office européen des brevets

(11) Veröffentlichungsnummer: **0 001 782**
**B1**

(12) # EUROPÄISCHE PATENTSCHRIFT

(45) Veröffentlichungstag der Patentschrift: **30.06.82**

(51) Int. Cl.³: **C 08 F 291/02** //C08F265/06

(21) Anmeldenummer: **78101159.8**

(22) Anmeldetag: **14.10.78**

(54) **Verfahren zur Herstellung von Pfropfmischpolymerisaten.**

(30) Priorität: **05.11.77 DE 2749579**

(43) Veröffentlichungstag der Anmeldung:
**16.05.79 Patentblatt 79/10**

(45) Bekanntmachung des Hinweises auf die Patenterteilung:
**30.06.82 Patentblatt 82/26**

(84) Benannte Vertragsstaaten:
**BE DE FR GB NL**

(56) Entgegenhaltungen:
**DE - A - 2 116 653**
**DE - A - 2 546 238**

**B. VOLLMERT "Polymer Chemistry" 1973, Springer Verlag, New York, Heidelberg, Berlin Seiten 112, 113**

**Makromolekulave Chemie Band 177 (1976) R. Kerber et al "Synthese und Charakterisierung von Copolymeren aus Azo-Initiatoren und Styrol" Seite 1357 bis 1371**

(73) Patentinhaber: **BASF Aktiengesellschaft**
**Carl-Bosch-Strasse 38**
**D-6700 Ludwigshafen (DE)**

(72) Erfinder: **Naarmann, Herbert, Dr.**
**Haardtblick 15**
**D-6719 Wattenheim (DE)**
Erfinder: **Mc Kee, Graham Edmund, Dr.**
**Londoner Ring 4**
**D-6700 Ludwigshafen (DE)**
Erfinder: **Schmitt, Burghard, Dr.**
**Hermannstrasse 3**
**D-6520 Worms (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 001 782 B1

Courier Press, Leamington Spa, England.

Verfahren zur Herstellung von Pfropfmischpolymerisation

Die vorliegende Erfindung betrifft ein Verfahren zur Herstellung von schlagfesten und alterungsbeständigen Pfropfmischpolymerisaten durch Pfropfpolymerisation von harten Polymerisate bildenden Monomeren in Gegenwart eines gesättigten und vernetzten kautschukelastischen Polymerisats.

Die herstellung von schlagfesten Formmassen durch Pfropfmischpolymerisation von harte Polymerisate bildenden Monomeren, beispielsweise Styrol, Acrylnitril und/oder Methylmethacrylat in Gegenwart eines Kautschuks ist wohlbekannt. Will man dabei nicht nur zu schlagfesten, sondern auch gleichzeitig witterungs- und alterungsbeständigen Produkten gelangen, müssen bei der Pfropfpolymerisation gesättigte Kautschuke, wie beispielsweise kautschukelastische Acrylsäureester-Polymerisate oder Äthylen-Propylen-Kautschuke eingesetzt werden. Zur Erzielung einer guten Schlagfestigkeit der Formmassen hat es sich dabei als günstig erwiesen, wenn die bei der Pfropfmischpolymerisation eingesetzten gesättigten Kautschuke vernetzt sind. Derartige Formmassen sind z.B. aus der DE—C 12 60 135 bekannt.

Ein Nachteil dieser bekannten Formmassen besteht jedoch darin, daß die harte Polymerisate bildenden Monomeren bei der Pfropfmischpolymerisation nur schlecht auf das gesättigte und vernetzte kautschukelastische Polymerisat aufpfropfen, wodurch nicht die mögliche optimale Schlagfestigkeit bei den Formmassen erreicht wird. Es sind daher schon viele Versuche unternommen worden, bei der Polymerisation von harte Polymerisate bildenden Monomeren in Gegenwart von gesättigten und vernetzten kautschukelastischen Polymerisaten die Pfropfausbeute, d.h. also den Anteil der auf das kautschukelastische Polymerisat aufgepfropften Monomeren, zu erhöhen.

Hierzu wird beispielsweise in der DE—B 22 58 541 empfohlen, bei der Herstellung des als Pfropfgrundlage dienenden kautschukelastischen Polymerisats Derivate der Monoallylfumar- bzw. -maleinsäure als Comonomere zu verwenden. Es hat sich jedoch gezeigt, daß durch diese Maßnahme nur der gleiche Erfolg erzielt wird wie beim Einsatz üblicher Vernetzungsmittel bei der Herstellung des kautschukelastischen Polymerisats (vgl. deutsche Patentschriften 11 64 080 und 12 60 135).

Es wurde auch schon vorgeschlagen, in die gesättigten und vernetzten kautschukelastischen Polymerisate zur Erhöhung der Pfropfaktivität radikalische oder Radikale bildende Gruppen einzuführen. Dies kann beispielsweise durch Bestrahlung des gesättigten vernetzten kautschukelastischen Polymerisats in Gegenwart von Sauerstoff oder durch chemische Umsetzung des kautschukelastischen Polymerisats geschehen. Vorteilhafterweise führt man Radikale bildende Gruppen in das gesättigte und vernetzte kautschukelastische Polymerisat aber durch Copolymerisation von Radikale bildende Gruppen enthaltenden Monomeren bei der Herstellung des kautschukelastischen Copolymerisats ein.

So wird in den deutschen Auslegeschriften 10 55 240 und 11 16 403 ein Verfahren zur Herstellung von Pfropfmischpolymerisaten beschrieben, gemäß dem man zunächst kautschukelastische Polymerisate bildende Monomere zusammen mit Radikale bildende Gruppen enthaltenden monomeren Verbindungen unter solchen Bedingungen, bei denen die Radikale bildenden Gruppen nicht aufspalten, copolymerisiert. In Gegenwart dieses Radikale bildende Gruppen enthaltenden, gesättigten und vernetzten kautschukelastischen Polymerisats werden dann die harte Polymerisate bildenden Monomeren unter solchen Bedingungen pfropfpolymerisiert, unter denen die Radikale bildenden Gruppen des kautschukelastischen Copolymerisats aufspalten. Die sich dabei im kautschukelastischen Polymerisat bildenden Radikale vermögen die Polymerisation der harte Polymerisate bildenden Monomeren zu initiieren und führen so zu einer graduellen Erhöhung der Pfropfausbeute bei der Pfropfmischpolymerisation. Entsprechende Verfahren sind auch aus der DE—A 25 46 238 und aus Makromolekulare Chemie, Band 177 (1976), S. 1357 bis 1371 bekannt. Jedoch auch diese Verfahren führen noch nicht zu Produkten mit einem optimalen Eigenschaftsbild.

"In der DE—A 21 16 653 ist beschrieben, "Aufpfropfmonomere" bei der Herstellung der Elastomerphase zu verwenden. Es handelt sich bei den genannten "Aufpfropfmonomeren" jedoch um übliche, mindestens zwei reaktionsfähige Doppelbindungen aufweisende Comonomere, bei denen schon während der Herstellung der Elastomerphase die nach dem Einbau noch verbleibenden reaktiven Doppelbindungen teilweise unter Vernetzung reagieren. Dazu kommt, daß während der Pfropfung, für die ein Initiator erforderlich ist, eine weitere Vernetzung des Kautschuks in der Oberflächenschicht erfolgen kann.

Die in der zit. DE—A beschriebenen "Aufpfropfmonomeren" enthalten keine "radikalbildenden Gruppen"; es sind übliche Vernetzungsmonomere, deren nach der Polymerisation gegebenenfalls noch vorhandene Doppelbindungen durch einen Radikalstarter zur Polymerisation angeregt werden müssen. Es war somit bei Kenntnis dieser Druckschrift nicht naheliegend, radikalbildende Gruppen enthaltende Monomere bei Umsätzen von 50 bis 90 Gew.% beim Aufbau der elastomeren Phase anzuwenden, um zu Formmassen mit guten mechanischen Eigenschaften zu gelangen."

Aufgabe der vorliegenden Erfindung war es daher, die bekannten schlagfesten, alterungs- und witterungsbeständigen Pfropfmischpolymerisate auf Basis von gesättigten und vernetzten kautschukelastischen Polymerisaten in ihren mechanischen Eigenschaften, insbesondere hinsichtlich ihrer Schlagfestigkeit, Oberflächenglanz und Wärmestandfestigkeit, zu verbessern. Diese Aufgabe wird mit dem erfindungsgemäßen Verfahren gelöst.

Gegenstand der vorliegenden Erfindung ist demzufolge ein Verfahren zur Herstellung von Pfropfmischpolymerisaten durch Polymerisation von harte Polymersate bildenden Monomeren in Gegenwart eines gesättigten und vernetzten kautschukelastischen Polymerisats mit einer Glasübergangstemperatur unterhalb 0°C, bei dem zunächst (A) die das kautschukartige Polymerisat bildenden Monomeren zusammen mit copolymerisierbaren, Radikale bildende Gruppen enthaltenden monomeren Verbindungen unter Erhalt dieser Radikale bildenden Gruppen zu einem Radikale bildenden Gruppen enthaltenden, gesättigten und vernetzten kautschukelastischen Polymerisat mischpolymerisiert werden und anschließend (B) die harte Polymerisate bildenden Monomeren in Gegenwart des in der Verfahrensstufe (A) erhaltenen kautschukelastischen Polymerisats unter Bedingungen polymerisiert werden, bei denen die Radikale bildenden Gruppen des kautschukelastischen Polymerisats aufspalten. Das Verfahren ist dadurch gekennzeichnet, daß man die copolymerisierbaren, Radikale bildende Gruppen enthaltenden monomeren Verbindungen bei der Herstellung des gesättigten und vernetzten kautschukelastischen Polymerisats dem Polymerisationsgemisch in der Verfahrensstufe (A) erst bei einem Umsatz der das kautschukelastische Polymerisat bildenden Monomeren im Bereich von 50 bis 90 Gew.% zusetzt und das Polymerisationsgemisch dann auspolymerisiert.

Es hat sich überraschenderweise gezeigt, daß dadurch, daß die Radikale bildende Gruppen enthaltenden Comonomeren in der Verfahrensstufe (A) bei der Herstellung des gesättigten und vernetzten kautschukelastischen Polymerisats erst bei fortgeschrittenem Umsatz der das kautschukelastische Polymerisat bildenden Monomeren zugegeben werden, Pfropfmischpolymerisate mit verbesserten mechanischen Eigenschaften erhalten werden können. Insbesondere gelingt es mit der erfindungsgemäßen Maßnahme, die Schlagfestigkeit, den Oberflächenglanz und die Wärmestandfestigkeit der Pfropfmischpolymerisate zu erhöhen. Ein weitere Vorteil des erfindungsgemäßen Verfahrens im Vergleich zu den beispielsweise aus den deutschen Auslegeschriften 10 55 240 und 11 16 403 bekannten Verfahrensweisen besteht darin, daß man geringere Mengen an den copolymerisierbaren, Radikale bildenden Gruppen enthaltenden monomeren Verbindungen einsetzen kann und in der Wahl dieser Radikale bildenden Gruppen enthaltenden monomeren Verbindungen erheblich freier ist als bei der aus dem Stand der Technik bekannten Verfahrensweise, gemäß der die copolymerisierbaren, Radikale bildenden Gruppen enthaltenden monomeren Verbindungen bereits zu Beginn der Polymerisation in der Verfahrensstufe (A) in dem Reaktionsgemisch vorgelegt werden.

Zur Durchführung des erfindungsgemäßen Verfahrens wird zunächst in einer ersten Verfahrensstufe (A) ein Radikale bildende Gruppen enthaltendes, gesättigtes und vernetztes kautschukelastisches Polymerisat hergestellt. Gesättigte kautschukelastische Polymerisate im Sinne dieser Erfindung sind insbesondere die Acrylsäureester-Polymerisate, die sich von Acrylsäureestern mit 1 bis 8 Kohlenstoffatomen in der Alkoholkomponente ableiten. Geeignete Acrylsäure-Ester zum Aufbau der kautschukelastischen Acrylsäureester-Polymerisate sind beispielsweise Äthylacrylat, n-Butylacrylat oder Äthylhexylacrylat. Zum Zweck der Erfindung — können die Acrylsäureester bei der Herstellung des kautschukelastischen Polymerisats alleine oder in Mischung miteinander eingesetzt werden. Gegebenenfalls können noch bis zu 30 Gew.% anderer Comonomerer, wie z.B. Styrol, Acrylnitril oder Vinylalkyläther zusammen mit den Acrylsäurealkylestern zur Herstellung der kautschukelastischen Acrylsäureester-Polymerisate mitverwendet werden. Zu den gesättigten kautschukelastischen Polymerisaten gehören des weiteren auch die Äthylen-Propylen-Kautschuke, die mittels eines nicht konjugierten Diolefins vernetzt sind (EPDM-Kautschuke). Die in der Verfahrensstufe (A) hergestellten kautschukelastischen Polymerisate sollen eine Glasübergangstemperatur unterhalb 0°C, vorzugsweise unterhalb —20°C, aufweisen. Die Ermittlung der Glasübergangstemperatur kann dabei bei den nach bei B. Vollmert, Grundriß der makromolekularen Chemie, Seiten 406 bis 410, Springer-Verlag, Heidelberg (1962), angegebenen Methoden erfolgen.

Die Verfahrensstufe (A) wird erfindungsgemäß so durchgeführt, daß zunächst die das kautschukelastische Polymerisat bildenden Monomeren, beispielsweise die oben angeführten Acrylsäureester, gegebenenfalls zusammen mit anderen Comonomeren, in an und für sich üblicher und bekannter Weise polymerisiert werden. Die Polymerisationsbedingungen sind dabei jedoch so zu wählen, daß die Radikale bildenden Gruppen der copolymerisierbaren, Radikale bildende Gruppen enthaltenden monomeren Verbindungen, die im Laufe der Polymerisation zugesetzt werden, nur in geringem Umfang aufgespalten werden. Dies kann z.B. durch Polymerisation der das kautschukelastische Polymerisat bildenden Monomeren unter den in der DE—B 1 055 240 beschriebenen Bedingungen geschehen.

Vorteilhafterweise wind jedoch die Polymerisation der das kautschukelastische Polymerisat bildenden Monomeren in der Verfahrensstufe (A) in wäßriger Emulsion durchgeführt. Hierbei werden die üblichen Emulgatoren, wie z.B. Alkalisalze von Alkyl- oder Alkylarylsulfonaten, Alkylsulfonate, Fettalkoholsulfonate oder Fettsäuren mit 1 bis 30 Kohlenstoffatomen, in Mengen im allgemeinen von 0,3 bis 5, insbesondere von 1,0 bis 2,0 Gew.%, bezogen auf die Monomeren, verwendet. Ebenso können die anderen bekannten und üblichen Polymerisationshilfsstoffe, wie Puffersubstanzen, Molekulargewichtsregler etc. eingesetzt werden. Die Wahl des Initiators und der Polymerisationstemperatur bei dieser Emulsion-Polymerisation richtet sich vornehmlich nach der Wahl der in der Verfahrensstufe (A) verwendeten copolymerisierbaren, Radikale bildende Gruppen enthaltenden monomeren Verbindung. Je höher die Zersetzungstemperatur der Radikale bildenden Gruppen dieser Verbindungen ist, desto höher kann die Polymerisationstemperatur gewählt werden. Für niedrige Polymerisationstemperaturen

von unter ca. 40°C, insbesondere für die Polymerisation bei Temperaturen im Bereich von 0 bis 30°C, werden in aller Regel Redox-Katalysatoren eingesetzt. Speziell zur Polymerisation von Acrylsäureestern geeignet erweisen sich die Systeme Bisulfit/Wasserstoffperoxid/Fe(II) und t-Butylhydroperoxid/Ascorbinsäure/Fe(II). Können höhere Polymerisationstemperaturen etwa im Bereich von 30 bis 90°C, vorzugsweise im Bereich von 50 bis 75°C angewandt werden, kann man die für die Emulsions-Polymerisation üblichen wasserlöslichen Initiatoren, beispielsweise die Persulfate, insbesondere Kaliumpersulfat, verwenden.

Die Zugabe der copolymerisierbaren, Radikale bildende Gruppen enthaltenden monomeren Verbindungen in der Verfahrensstufe (A) erfolgt erfindungsgemäß, wenn 50 bis 90 Gew.%, insbesondere 75 bis 90 Gew.% der das kautschukelastische Polymerisat bildenden Monomeren umgesetzt sind. Die Bestimmung des Umsatzes kann auf bekannte Art und Weise, beispielsweise durch Probeentnahme aus dem Polymerisations-Gemisch, erfolgen. Es hat sich gezeigt, daß umso günstigere Ergebnisse erzielt werden, je später die copolymerisierbaren, Radikale bildenden Gruppen enthaltenden monomeren Verbindungen dem Polymerisationsgemisch in der Verfahrensstufe (A) zugegeben werden. Wesentliche Voraussetzung ist dabei jedoch, daß die copolymerisierbaren, Radikale bildende Gruppen enthaltenden monomeren Verbindungen so rechtzeitig zugegeben werden, daß sie noch mit den das kautschukelastische Polymerisat bildenden Monomeren mischpolymerisieren können und in das kautschukelastische Polymerisat einpolymerisiert werden. Hierzu ist es erforderlich, daß die Zugabe der copolymerisierbaren, Radikale bildende Gruppen enthaltenden monomeren Verbindungen spätestens bei einem Umsatz der das kautschukelastische Polymerisat bildenden Monomeren von 90 Gew.% abgeschlossen ist. Werden die copolymerisierbaren, Radikale bildende Gruppen enthaltenden monomeren Verbindungen bei einem Umsatz der das kautschukelastische Polymerisat bildenden Monomeren unter 50 Gew.% dem Polymerisationsgemisch der Verfahrensstufe (A) zugegeben, werden die erfindungsgemäßen Erfolge nicht erzielt. Insbesondere ergeben sich häufig sehr hohe Vernetzung des Polymerisates der Verfahrensstufe (A) — gekennzeichnet durch niedrigen Quellungsgrad in üblichen Lösungsmitteln — und verminderter Pfropferfolg in Verfahrensstufe (B). An Prüfkörpern werden dann oberflächenschlieren, Bindenahtmarkierung und herabgesetzte Zähigkeit beobachtet.

Die Zugabe der copolymerisierbaren, Radikale bildende Gruppen enthalten monomeren Verbindungen zu dem Polymerisationsgemisch der Verfahrensstufe (A) in dem genannten Umsatzbereich kann auf beliebige Art und Weise erfolgen. So können diese monomeren Verbindungen beispielsweise auf einmal oder in mehreren Portionen stufenweise dem Polymerisationsgemisch zugesetzt werden. Gleichermaßen ist auch eine kontinuierliche Zudosierung möglich. Die copolymerisierbaren, Radikale bildende Gruppen enthaltenden monomeren Verbindungen werden dabei üblicherweise in Mengen von $10^{-2}$ bis 2,5 Gew.%, vorzugsweise von $10^{-2}$ bis $10^{-1}$ Gew.%, bezogen auf die das kautschukelastische Polymerisat bildenden Monomeren eingesetzt. Nach vollständiger Zugabe der copolymerisierbaren, Radikale bildende Gruppen enthaltenden monomeren Verbindungen zu dem Polymerisationsgemisch der Verfahrensstufe (A) wird dieses bis zu einem Umsatz von mehr als 90 Gew.%, vorzugsweise mehr als 96 Gew.%, der das kautschukelastische Polymerisat bildenden Monomeren auspolymerisiert.

Als copolymerisierbare, Radikale bildende Gruppen enthaltende monomere Verbindungen zum Zwecke der Erfindung kommen grundsätzlich alle bekannten Verbindungen dieser Art in Betracht, wie sie beispielsweise in der Literatur für den in Rede stehenden Zweck beschrieben werden. In diesem Zusammenhang sei insbesondere auf die deutschen Auslegeschriften 1 055 240 und 1 116 403 sowie die DE—A 25 46 238 und Makromolekulare Chemie 177 (1976), Seiten 1357 bis 1371, verwiesen. Besonders günstig sind solche, Radikale bildende Gruppen enthaltenden monomeren Verbindungen, bei denen die Halbwertszeiten des radikalischen Zerfalls im Temperaturebereich 60 bis 120°C zwischen 0,25 und 2 Stunden liegen. Als Beispiele für copolymerisierbare, Radikale bildende Gruppen enthaltende monomere Verbindungen, die gemäß der vorliegenden Erfindung eingesetzt werden können, seien genannt:

1. ungesättigte Peroxide der Formel (I)

$$R^1—O—O—R^2 \qquad (I)$$

2. monomere Azoverbindungen der Formel (IIa und IIb)

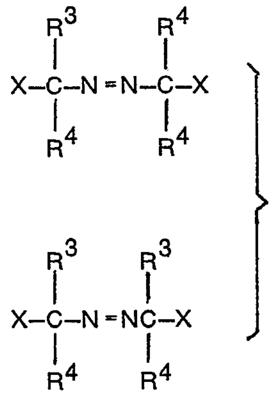

oder

(IIa)

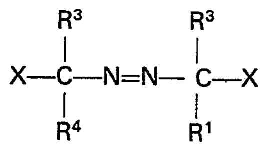

(IIb)

sowie

3. ungesättigte, C—C-labile Verbindungen, die in Radikale zu verfallen vermögen, der Formel (III)

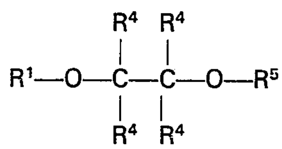

(III)

oder 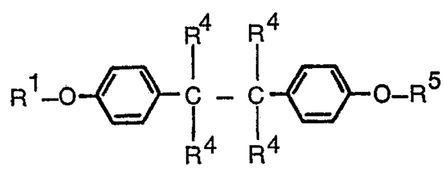 (IV)

In den unter I bis IV genannten Formeln bedeutet:

$R^1$: $CH_2{=}CH{-}CO$; 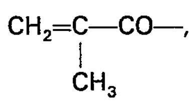, $HOOC{-}CH{=}CH{-}CO{-}$,

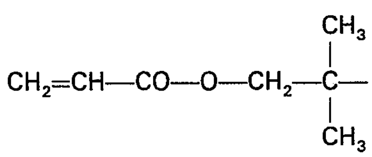

$R^2$: Alkyl-, Cycloalkyl, Aryl-Alkaryl- oder Aralkyl-Rest mit 1 bis 20 C-Atomen oder gleich $R^1$;

$R^3$: $CH_2{=}CH{-}COO{-}(CH_2)_n{-}$; 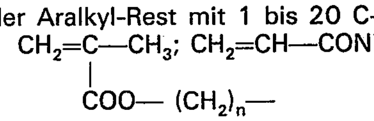; $CH_2{=}CH{-}CONH{-}(CH_2)_n{-}$,

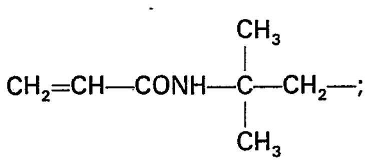

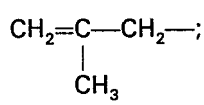 $n=1, 2, 3, 4$

$R^4$: Alkyl-, Cycloalkyl-, Aryl-, Alkaryl- oder Aralkyl-Rest mit 1 bis 20 C-Atomen;
$R^5$: Wasserstoffe oder gleich $R^2$;
X: Cl, Br, $SO_3$, H, insbesondere CN.

Besonders bevorzugt wurden beim erfindungsgemäßen Verfahren die nachfolgend in der Tabelle 1 zusammengestellten Verbindungen (1) bis (8). Als kennzeichnende Größe sind deren Halbwertszeiten, $T_{1/2}$, bei einer vorgegebenen Temperatur in der Tabelle angegeben:

TABELLE 1

| | | Temp. | $T_{1/2}$ |
|---|---|---|---|
| (1) | 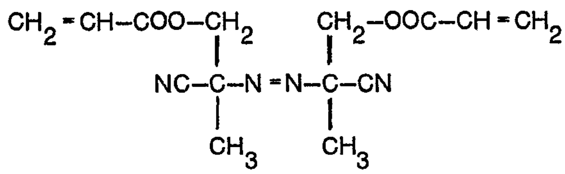 | 60 °C | 28' |
| (2) | 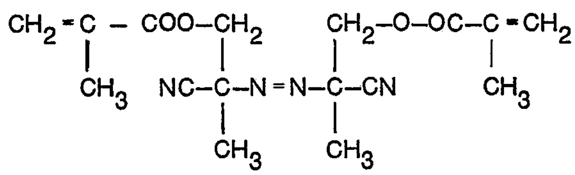 | 60 °C | 35' |
| (3) | 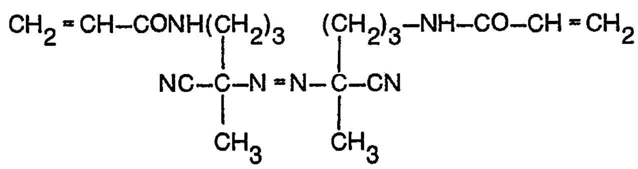 | 80 °C | 16 |
| (4) | 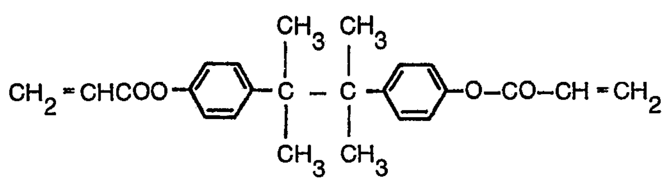 | 100 °C | 40' |
| (5) | 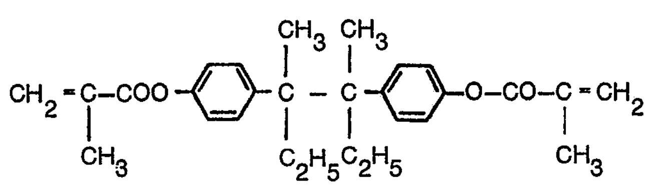 | 100 °C | 52 |
| (6) | 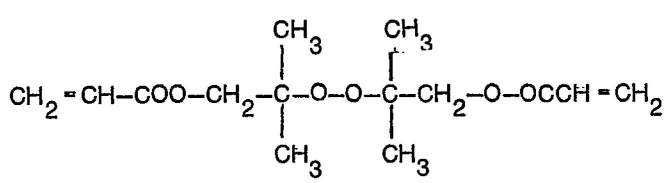 | 60 °C | 42' |
| (7) | 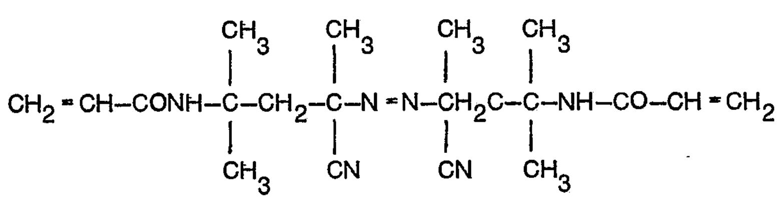 | 80 °C | 23' |
| (8) | 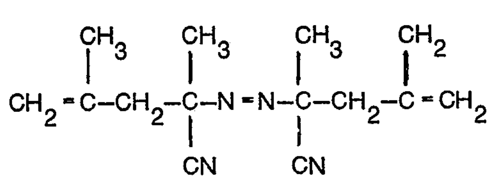 | 80 °C | 37 |

Die in der Verfahrensstufe (A) hergestellten Radikale bildende Gruppen enthaltenden, gesättigten kautschukelastischen Polymerisate müssen zur Erzielung einer guten Schlagfestigkeit der Pfropfmischpolymerisate vernetzt sein. Die Vernetzung der kautschukelastischen Polymerisate kann auf verschiedene Art und Weise erfolgen. So ist es möglich, die Polymerisation der das kautschukelastische Polymerisat bildenden Monomeren in Gegenwart geringer Mengen eines Vernetzungsmittels durchzuführen. So werden beispielsweise bei der Herstellung von EPDM-Kautschuken das Äthylen und Propylen in Gegenwart geringer Mengen eines nicht konjugierten Diolefins polymerisiert. Zur Herstellung von vernetzen kautschukelastischen Acrylester-Polymerisaten können die Acrylsäureester, gegebenenfalls zusammen mit weiteren Comonomeren, zusammen mit den bekannten und üblichen Vernetzungsmitteln, wie beispielsweise Divinylbenzol, Fumarsäure- bzw. Maleinsäure-diallylester, Butandioldiacrylat oder insbesondere des Acrylsäureesters des Tricyclodecenylalkohols, mischpolymerisiert werden. Die Vernetzungsmittel werden dabei dem Polymerisationsgemisch zu Beginn der Polymerisation zugesetzt und im allgemeinen in Mengen von 0,1 bis 5 Gew.%, insbesondere 0,5 bis 2 Gew.%, bezogen auf die das kautschukelastische Polymerisat bildenden Monomeren, eingesetzt.

Bei dem erfindungsgemäßen Verfahren ist est jedoch möglich, in der Verfahrensstufe (A) bei der Herstellung des kautschukelastischen Polymerisats auf den Zusatz eigener Vernetzungsmittel zu verzichten und die Vernetzung des kautschukelastischen Polymerisats durch die copolymerisierbaren, Radikale bildende Gruppen enthaltenden monomeren Verbindungen zu bewirken. Dies kann beispielsweise dadurch geschehen, daß man in dem erfindungsgemäßen Verfahren solche copolymerisierbaren, Radikale bildende Gruppen enthaltenden monomeren Verbindungen einsetzt, die 2 oder mehr nicht konjugierte olefinische Doppelbindungen enthalten. Andererseits kann eine gewisse Vernetzung des kautschukelastischen Polymerisats auch dadurch erreicht werden, daß man bei der Copolymerisation der das kautschukelastische Polymerisat bildenden Monomeren und der copolymerisierbaren, Radikale bildenden Gruppen enthaltenden monomeren Verbindungen gezielt einen geringen Teil der Radikale bildenden Gruppen zersetzt, wodurch ebenfalls Vernetzung erzielt wird. Vorzugsweise wird jedoch die Vernetzung der kautschukelastischen Polymerisate durch Zusatz von Vernetzungsmitteln zu Beginn der Polymerisation in der Verfahrensstufe (A) bewirkt.

In der Verfahrensstufe (A) resultieren somit Radikale bildende Gruppen enthaltende, gesättigte unvernetzte kautschukelastische Polymerisate, die als Pfropfgrundlage für die in der nachfolgenden Verfahrensstufe (B) durchgeführte Pfropfpolymerisation der harte Polymerisate bildenden Monomeren dient. Aus der Gruppe der für die Herstellung von Pfropfpolymerisaten bekannten und gebräuchlichen Monomeren, die harte Polymerisate bilden und die grundsätzlich alle zum Zwecke der Erfindung eingesetzt werden können, seien Styrol, Acrylnitril und Methylmethacrylat und deren Mischungen besonders hervorgehoben. So können für die Pfropfpolymerisation in der Verfahrensstufe (B) Mischungen aus Styrol und Acrylnitril, Distyrol and Acrylnitril im Gewichtsverhältnis von 90:10 bis 60:40, vorzugsweise 75:25 bis 65:35, enthalten, verwendet werden. Gleichermaßen können auch Mischungen aus Styrol und Methylmethacrylat, die 5 bis 50 Gew.% Styrol und 95 bis 50 Gew.% Methylmethacrylat enthalten, für die Pfropfpolymerisation verwendet werden. Auch ternäre Mischungen aus Styrol, Acrylnitril und Methylmethacrylat, in denen die Monomeren im Gewichtsverhältnis 2,5/20/52,5 zueinander vorliegen, sind geeignet. Besonders vorteilhaft hat sich das erfindungsgemäße Verfahren auch für den Fall erwieser, in dem als Pfropfmonomeres Methylmethacrylat alleine eingesetzt werden soll.

Zur Durchführung der Pfropfpolymerisation in der Verfahrensstufe (B) werden in allgemeinen 20 bis 90 Gewichtsteile der harte Polymerisate bildenden Monomeren in Gegenwart von 80 bis 10 Gewichtsteilen des kautschukelastischen Polymerisats der Verfahrensstufe (A) polymerisiert. Wird das Pfropfpolymerisat direkt zu Formkörpern verarbeitet, so werden bei der Pfropfpolymerisation 65 bis 85 Gewichtsteile der harte Polymerisate bildenden Monomeren und 35 bis 15 Gewichtsteile des kautschukelastischen Polymerisats eingesetzt. Soll dagegen der Pfropfkautschuk vor der Herstellung der Formmassen noch mit einem harten Polymerisat abgemischt werden, so werden bei der Pfropfpolymerisation vorzugsweise 30 bis 50 Gewichtsteile der harte Polymere bildenden Monomere und 70 bis 50 Gewichtsteile des kautschukelastischen Polymerisats angewendet.

Die Pfropfpolymerisation selber kann dabei in an und für sich jeder beliebigen und bekannten Art und Weise durchgeführt werden. Es ist nur darauf zu achten, daß die Pfropfpolymerisation unter solchen Bedingungen durchgeführt wird, daß die Radikale bildenden Gruppen des als Pfropfgrundlage dienenden kautschukelastischen Polymerisats unter den Reaktionsbedingungen aufgespalten werden. Dies ist in Abhängigkeit von der in der Verfahrensstufe (A) eingesetzten copolymerisierbaren, Radikale bildende Gruppen enthaltenden monomeren Verbindungen im allgemeinen dann der Fall, wenn die Pfropfpolymerisation bei Temperaturen im Bereich von 30 bis 150°C ausgeführt wird. Vorzugsweise wird die Pfropfpolymerisation bei Temperaturen im Bereich von 80 bis 120°C durchgeführt.

Entweder wird die Pfropfpolymerisation der Verfahrensstufe (B), ebenso wie die Herstellung des kautschukelastischen Polymerisats in der Verfahrensstufe (A) in wäßriger Emulsion durchgeführt. Hierbei können die gleichen Polymerisations-Hilfsstoffe wie oben beschrieben, beispielsweise Emulgatoren, Puffersubstanzen, Regler etc., in bekannter und üblicher Weise verwendet werden. Es ist nicht unbedingt zwingend, jedoch günstig, wenn auch noch eine geringe Menge an weiterem, freiem Katalysator dem Polymerisationsgemisch zugesetzt wird. Sowohl wasserlösliche Persulfate als auch bevorzugt in Monomeren lösliche organische Peroxidverbindungen können verwendet werden. Deren Anteil

wird dabei auf 0,05 bis 0,2 Gew.% der Pfropfmonomeren begrenzt. Die Polymerisationstemperatur liegt bei druckloser Durchführung der Reaktion zwischen 30 und 80°C; bei Temperaturen zwischen 90 und 130°C werden die Pfropfmonomeren vorzugsweise unter Stickstoffüberdruck polymerisiert. Alternativ zu der vorstehend beschriebenen Verfahrensweise kann das kautschukelastische Polymerisat der Verfahrensstufe (A) — gegebenenfalls nach Abtrennung aus wäßriger Dispersion — in die Pfropfmonomeren eingebracht und diese gegebenenfalls unter Zusatz üblicher Polymerisationsinitiatoren, wie Benzoylperoxid, Lauroylperoxid entweder in Substanz oder nach Zusatz eines inerten Lösungsmittels polymerisiert werden.

Das aus der Reaktionslösung in üblicher und bekannter Weise isolierte Pfropfmischpolymerisat zeichnet sich neben der Alterungs- und Witterungsbeständigkeit insbesondere durch seine guten mechanischen Eigenschaften aus. Im Vergleich zu Produkten, die nach bekannten Verfahren hergestellt worden sind, wird erfindungsgemäß insbesondere die Schlagfestigkeit, die Wärmestandfestigkeit und der Oberflächenglanz der Pfropfmischpolymerisate verbessert. Die erfindungsgemäßen Vorteile treten dabei dann besonders deutlich und drastisch hervor, wenn in der Verfahrensstufe (B) als harte Polymerisate bildende Monomere solche Monomeren eingesetzt werden, die bekanntlich schlecht auf gesättigte Kautschuke pfropfen. Hierzu zählt insbesondere Methylmethacrylat. Bei Einsatz von Methylmethacrylat als Pfropfmonomerem und einem kautschukelastischen Acrylester-Polymerisat als Pfropfgrundlage lassen sich erfindungsgemäß somit transparente, alterungs- und witterungsbeständige Formmassen mit hoher Schlagfestigkeit und einer optimal abgestimmten Eigenschaftskombination erzeugen.

Je nach Kautschukgehalt können die erfindungsgemäß hergestellten Pfropfmischpolymerisate auch noch mit harten, glasartigen Polymerisaten abgemischt werden. Diese harten, glasartigen Polymerisate sollen dabei mit den harten Polymerisation aus den in der Verfahrensstufe (B) eingesetzten Monomeren verträglich bzw. weitgehend verträglich sein. In diesen Abmischungen liegt der Gehalt an dem kautschukelastischen Polymerisat in allgemeinen im Bereich von 5 bis 30 Gew.%.

Die erfindungsgemäß hergestellten Pfropfpolymerisate können die für solche Produkte üblichen Zusatzstoffe, wie Füllstoffe, Stabilisatoren, Antistatika, Weichmacher, Flammschutzmittel, Schmiermittel, Farbstoffe und/oder Pigmente, vorzugsweise in Mengen bis zu etwa 30 Gew.% ihres Gewichtes, enthalten. Sie lassen sich durch Extrusion, Tiefziehen oder Spritzgießen zu verschiedenartigen Formkörpern verarbeiten.

Die Erfindung wird durch die nachfolgenden Beispiele 1 und 2 erläutert. Die in den Beispielen genannten Teile und Prozente beziehen sich auf das Gewicht.

In den Beispielen 1 und 2 sind eine Reihe von Vergleichsversuchen enthalten, die den Stand der Technik repräsentieren, wie er in der Einleitung der Anmeldung beschrieben ist. In Beispiel 1 stellen lediglich die Versuche Nr. 5, 6 sowie 9 und 10 die erfindungsgemäße Lehre dar. Die anderen Versuche repräsentieren den Stand der Technik. In Beispiel 2 wurde anstelle von Methylmethacrylat ein Monomerengemisch aus 65 Teilen Styrol und 35 Teilen Acrylnitril in der Stufe (B) verwendet. Ansonsten wurden die Versuche 11 bis 16 wie in den Versuchen 1 bis 6 von Beispiel 1 beschrieben, durchgeführt, wobei jeweils das Beispiel in der zweiten Dekade dem entsprechenden Beispiel in der ersten Dekade entsprach. Lediglich die Versuche 15 und 16 von Beispiel 2 repräsentieren die erfindungsgemäße Lehre.

Die Versuchsergebnisse der in Beispiel 1 genannten Versuche Nr. 1 bis 10 sind in der Tabelle 2 dargestellt, die Ergebnisse von Beispiel 2 (Versuche Nr. 11 bis 16) finden sich in Tabelle 3. Es sind in den beiden Tabellen als Parameter der Gelgehalt als Maß für den nichtlöslichen Anteil nach Verfahrensstufe (B) aufgetragen. Dabei handelt es sich um eine Mischung von 2,6 Gewichtsteilen der Polymerisate in THF, die 10 Stunden geschüttelt und danach mit einer präparativen Ultrazentrifuge in löslichen und nicht löslichen Anteil aufgetrennt wird. Der zur Gewichtskonstanz getrocknete nicht lösliche Anteil ergibt im Verhältnis zur eingesetzten Polymerisatmenge den Gelgehalt. Ferner ist in einer weiteren Spalte die Schlagzähigkeit, gemessen in kJ/m$^2$ an Probekörpern gemäß DIN 53 453 aufgeführt. Die in Klammern angegebenen Werte in dieser Spalte beziehen sich auf den Prozent-Bruch von 10 geprüften Normkleinstäben. Die Bruchenergie in Nm nach DIN 53 443 an 2 mm Rundplatten ist in einer weiteren Spalte als Maß für die Schlagzähigkeit der erhaltenen Proben aufgeführt. Schließlich ist die Reflexion als Maß für den Oberflächenglanz sowie die Vicat-Temperatur gemäß DIN 53 460 als Maß für die Wärmestandfestigkeit aufgeführt.

Aus dem Tabellen 2 und 3 ist jeweils ersichtlich, daß die nach dem erfindungsgemäßen Verfahren durchgeführten Versuche zu Produkten führen, deren Oberflächenglanz, Wärmebeständigkeit und Schlagzähigkeit jeweils über den Werten liegt, wie sie bei Proben erhalten werden, die nach Verfahren vom Stand der Technik hergestellt worden sind.

Beispiel 1

Versuch 1 (Vergleichsversuch)

In einem Kessel mit Blattrührer wurden unter $N_2$-Atmosphäre eingebracht

150 Teile $H_2O$

1,2 Teile des Natriumsalzes einer Paraffinsulfonsäure ($C_{12}$—$C_{18}$)

0,3 Teile Kaliumpersulfat (KPS)

0,3 Teile Natriumhydrogencarbonat

0,15 Teile Natriumpyrophosphat.

Die Lösung wurde auf die Temperatur von 60°C eingestellt und nachfolgend die Mischung von
0,33 Teilen Dicyclopentadienylacrylat (DCPA) in
16,33 Teilen Äthylhexylacrylat (AHA)
zugeführt. Nach 15 min. Vorpolymerisation wurden weitere 1,77 Teile DCPA und 81,67 Teile AHA über die Zeit von 4 Stunden zudosiert. Nach einer Stunde Nachpolymerisation fiel eine Polymerdispersion mit Feststoffgehalt von etwa 40% an.

Zu 100 Teilen dieser Dispersion wurden bei 85°C unter $N_2$ 237 Teile $H_2O$ und 0,36 Teile KPS zugesetzt und im Verlauf von 3 Stunden 120 Teile Methylmethacrylat (MMA) zugegeben. Nach einer Stunde Nachpolymerisation war die Polymerisation abgeschlossen, der Feststoffgehalt lag bei etwa 35%.

100 Teile dieser Dispersion wurden 200 Teilen einer 0.6%igen $MgSO_4$-Lösung bei 95°C zugemischt und die Temperatur für etwa 15 Minuten auf 100°C gebracht, nachfolgend gekühlt, filtriert, das Polymerisat abgeschleudert und bei 60°C im Vakuum getrocknet.

Versuch 2 (Vergleichsversuch)

Wiederholung des Versuchs 1 unter Erhöhung der Temperatur während der Polymerisation des Methylmethacrylats auf 120°C und Verkürzung dessen Zulaufs auf 1 Stunde.

Versuch 3 (Vergleichsversuch)

Wiederholung von Versuch 1 unter Zusatz von 0,477 Teilen der Verbindung 3 (vgl. Tabelle 1) zum Äthylhexylacrylatzulauf und ohne KPS-Zusatz bei der Polymerisation des Methylmethacrylats.

Versuch 4 (Vergleichsversuch)

Wiederholung von Versuch 2 unter Zusatz von 0,579 Teilen der Verbindung 5 (vgl. Tabelle 1) zum Äthylhexylacrylatzulauf und ohne KPS-Zusatz bei der Polymerisation des Methylmethacrylates.

Versuch 5 (erfindungsgemäß)

Wiederholung von Versuch 3 unter Zusatz von 0,477 Teilen der Verbindung 3 (vgl. Tabelle 1) zum Äthylhexylacrylatzulauf nach einer Zulaufzeit von 153 Minuten. Zu diesem Zeitpunkt war durch Feststoffgehaltsbestimmung ein Umsatz von 70% in der Polymerisationsstufe (A) nachgewiesen worden.

Versuch 6 (erfindungsgemäß)

Wiederholung von Versuch 4 unter Zusatz von 0,579 Teilen der Verbindung 5 (vgl. Tabelle 1) zum Äthylenhexylacrylatzulauf nach 153 Minuten Zulaufzeit. Eine Feststoffgehaltsbestimmung ergab einen Umsatz von 70%.

Versuch 7 (Vergleichsversuch)

Wiederholung von Versuch 3 unter Zusatz von 0,159 Teilen der Verbindung 3 (vgl. Tabelle 1) zum Äthylhexylacrylatzulauf und ohne KPS-Zusatz bei der Polymerisation des Methylmethacrylates.

Versuch 8 (Vergleichsversuch)

Wiederholung von Versuch 4 unter Zusatz von 0,193 Teilen der Verbindung 5 (vgl. Tabelle 1) zum Äthylhexylacrylatzulauf und ohne KPS-Zusatz bei der Polymerisation des Methylmethacrylates.

Versuch 9 (erfindungsgemäß)

Wiederholung von Versuch 5 unter Zusatz von 0,159 Teilen der Verbindung 3 (vgl. Tabelle 1) zum Äthylhexylacrylatzulauf nach 153 Minuten Zulaufzeit. Eine Feststoffgehaltsbestimmung ergab einen Umsatz von 70% nach der genannten Zulaufzeit.

Versuch 10 (erfindungsgemäß)

Wiederholung von Versuch 6 unter Zusatz von 0,193 Teilen der Verbindung 5 (vgl. Tabelle 1) zum Äthylhexylacrylatzulauf nach 154 Minuten Zulaufzeit. Eine Feststoffgehaltsbestimmung ergab einen Umsatz von 70% nach der genannten Zulaufzeit.

## Beispiel 2

Versuche 11 bis 16

Die Versuche 11 bis 16 wurden jeweils so durchgeführt wie in den Versuchen 1 bis 6 von Beispiel 1 beschrieben. Anstelle von Methylmethacrylat wurde jedoch ein Gemisch von 65 Teilen Styrol und 35 Teilen Acrylnitril verwendet. In den Versuchen 15 und 16 wurden jeweils nach 153 Minuten Zulaufzeit die Verbindungen 3 bzw. 5 (vgl. Tabelle 1) in den in den Versuchen 5 bzw. 6 genannten Mengen nach 153 Minuten Zulaufzeit dem Äthylnexylacrylat zugesetzt. Zu diesem Zeitpunkt war durch Feststoffgehaltsbestimmung ein Umsatz in der Verfahrensstufe (A) von 70% festgestellt worden.

Tabelle 2

| Beispiel 1 | Gelgehalt | Schlagzähigkeit | Bruchenergie | Glanz % Reflexion | Vicat-Temperatur °C |
|---|---|---|---|---|---|
| Versuch 1*) | 28,3 | 53,9 (100) | 2,15 | 31 | 80 |
| 2*) | 29,1 | 63,2 (100) | 2,98 | 34 | 82 |
| 3*) | 34,2 | 62,0 (100) | 5,04 | 32 | 79 |
| 4*) | 30,2 | 78,2 (100) | 4,78 | 20 | 78 |
| 5 | 47,8 | 81,9 (60) | 11,90 | 81 | 89,5 |
| 6 | 44,5 | 103 (70) | 13,85 | 76 | 88 |
| 7*) | 30,7 | 43,9 (100) | 4,03 | 30 | 80 |
| 8*) | 31,7 | 67,1 (100) | 3,66 | 40 | 79 |
| 9 | 39,9 | 73,2 (50) | 12,42 | 80 | 90,5 |
| 10 | 43,9 | 88,6 (60) | 12,18 | 82 | 90 |

*) Vergleichsversuch

Tabelle 3

| Beispiel 2 | Gelgehalt | Schlagzähigkeit | Bruchenergie | Glanz % Reflexion | Vicat-Temperatur °C |
|---|---|---|---|---|---|
| Versuch 11*) | 36,4 | 79,0 (70) | 5,88 | 14 | 85 |
| 12*) | 31,2 | 70,3 (90) | 7,42 | 18 | 88 |
| 13*) | 43,8 | 79,3 (50) | 10,7 | 38 | 86 |
| 14*) | 40,6 | 71,9 (60) | 4,64 | 26 | 83 |
| 15 | 50,7 | — (0) | 33,4 | 75 | 93,5 |
| 16 | 56,4 | 95,6 (10) | 34,7 | 81 | 95,5 |

*) Vergleichsversuch

**Patentanspruch**

Verfahren zur Herstellung von Pfropfmischpolymerisaten durch Polymerisation von harte Polymerisate bildenden Monomeren in Gegenwart eines gesättigten und vernetzten kautschukelastischen Polymerisats mit einer Glasübergangstemperatur unterhalb 0°C, bei dem zunächst

(A) die das gesättigte und vernetzte kautschukelastische Polymerisat bildenden Monomeren zusammen mit copolymerisierbaren, Radikale bildende Gruppen enthaltenden monomeren Verbindungen unter Erhalt dieser Radikale bildenden Gruppen zu einem Radikale bildende Gruppen enthaltenden, gesättigten und vernetzten kautschukelastischem Polymerisat mischpolymerisiert werden und anschließend

(B) die harte Polymerisate bildenden Monomeren in Gegenwart des in der Verfahrensstufe (A) erhaltenen kautschukelastischen Polymerisats unter Bedingungen polymerisiert werden, bei denen die Radikale bildenden Gruppen des kautschukelastischen Polymerisats aufspalten, dadurch gekennzeichnet, daß man die copolymerisierbaren, Radikale bildende Gruppen enthaltenden monomeren Verbindungen bei der Herstellung des gesättigten und vernetzten kautschukelastischen Polymerisats in der Verfahrensstufe (A) dem Polymerisationsgemisch erst bei einem Umsatz der das kautschukelastische Polymerisat bildenden Monomeren im Bereich von 50 bis 90 Gew.% zusetzt und das Polymerisationsgemisch dann auspolymerisiert.

**Claim**

A process for the preparation of graft copolymers by polymerization of monomers which form hard polymers in the presence of a saturated crosslinked elastomeric polymer having a glass transition temperature below 0°C, in which first

(A) the monomers which form the saturated crosslinked elastomeric polymer are copolymerized with copolymerizable monomeric compounds, containing free radical-forming groups, under conditions which preserve the said groups, to give a saturated crosslinked elastomeric polymer containing free radical-forming groups, and thereafter

(B) the monomers which form hard polymers are polymerized in the presence of the elastomeric polymer obtained in process stage (A), under conditions under which the free radical-forming groups of the elastomeric polymer decompose,

characterized in that the copolymerizable monomeric compounds containing free radical-forming groups are added, during the preparation of the saturated crosslinked elastomeric polymer, to the polymerization mixture in process stage (A) only when the conversion of the monomers forming the elastomeric polymer is from 50 to 90% by weight, after which polymerization of the mixture is taken to completion.

**Revendication**

Procédé de préparation de copolymères de greffage par polymérisation de monomères formant des polymérisats rigides en présence d'un polymérisat caoutchouteux saturé et réticulé d'une température de transition vitreuse inférieure à 0°C, dans lequel:

(A) on copolymérise en premier lieu les monomères formant le polymérisat caoutchouteux saturé et réticulé et des composés monomères copolymérisables, comprenant des groupes destinés à former des radicaux, dans des conditions permettant de conserver ces groupes destinés à former des radicaux en un copolymérisat caoutchouteux saturé et réticulé, contenant des groupes destinés à former des radicaux, puis

(B) on polymérise les monomères formant des polymérisats rigides en présence du polymérisat caoutchouteux obtenu dans la phase opératoire (A) dans des conditions provoquant le clivage des groupes destinés à former des radicaux du polymérisat caoutchouteux,

caractérisé en ce que, lors de la préparation du polymérisat caoutchouteux saturé et réticulé dans la phase opératoire (A), on n'ajoute les composés monomères copolymérisables, comprenant des groupes destinés à former des radicaux, au mélange en cours de polymérisation qu'au moment où 50 à 90% en poids des monomères formant le polymérisat caoutchouteux ont déjà été transformés, puis on complète la polymérisation du mélange.